# EUROPÄISCHE PATENTSCHRIFT

(11) **EP 2 244 917 B1**
(45) Veröffentlichungstag und Bekanntmachung des Hinweises auf die Patenterteilung: **02.12.2015**
(21) Anmeldenummer: 09713195.7
(22) Anmeldetag: 17.02.2009
(51) Int. Cl.: B60T 8/40, F16L 55/05

(54) **PULSATIONSDÄMPFUNGSKAPSEL**
PULSATION DAMPING CAPSULE
CAPSULE D AMORTISSEMENT DES PULSATIONS

(30) Priorität: 18.02.2008 DE 102008009834; 30.04.2008 DE 102008021524; 16.09.2008 DE 102008047303
(43) Veröffentlichungstag der Anmeldung: 03.11.2010
(73) Patentinhaber: Continental Teves AG & Co. oHG, 60488 Frankfurt (DE); Witzenmann GmbH, 75175 Pforzheim (DE)
(72) Erfinder: BARTSCH, Thomas, 65527 Niedernhausen (DE); JUNGBECKER, Johann, 55576 Badenheim (DE); SCHACK, Peter, 63500 Seligenstadt (DE); DRUMM, Stefan, A., 55291 Saulheim (DE); SCHMITT, Stefan, 63741 Aschaffenburg (DE); HALASY-WIMMER, Georg, 71665 Vaihingen (DE); KLEY, Ronald, 63500 Seligenstadt (DE); SECKNER, Marc, 67152 Ruppertsberg (DE); GLAS, Jochen, 75233 Tiefenbronn (DE); KÄMPFE, Andreas, 75173 Pforzheim (DE)
(86) Internationale Anmeldenummer: PCT/EP2009/051873
(87) Internationale Veröffentlichungsnummer: WO 2009/103709

(56) Entgegenhaltungen:
- EP-A2- 1 411 236
- WO-A-01/59319
- WO-A-01/76926
- DE-A1- 4 311 263
- DE-A1- 10 353 841
- DE-A1- 19 539 779
- DE-A1- 19 544 223
- DE-A1-102004 002 489
- DE-B3- 10 318 613
- DATABASE WPI Week 198325 Thomson Scientific, London, GB; AN 1983-J3992K XP002525703 & SU 950 996 B (AS GEOR MINING MECH) 15. August 1982 (1982-08-15)

## Beschreibung

Die Erfindung betrifft eine Pulsationsdämpfungskapsel nach dem Oberbegriff des Patentanspruchs 1.

Insbesondere elektronisch geregelte Fahrzeugbremsanlagen verfügen über ein Hydraulikaggregat umfassend einen Aufnahmekörper mit elektrohydraulischen Ventilen, mit wenigstens einer hydraulischen Pumpe, und mit Kanälen zur Verbindung der Pumpe mit wenigstens einem hydraulischen Verbraucher, wobei zwischen einem Druckmittelvolumen (THZ/Behälter,Niederdruckspeicher) und einer Saugseite der Pumpe oder zwischen einer Druckseite der Pumpe und dem hydraulischen Verbraucher eine Pulsationsdämpfungseinheit vorgesehen ist. Meist finden exzentergetriebene Radialkolbenpumpen Verwendung. Die genannten Hydraulikaggregate sind millionenfach im Einsatz.

Jede Kolbenverschiebung während einer Exzenterumdrehung kann stark vereinfacht in einen Saughub (0-π) und in einen Druckhub (π - 2π) eingeteilt werden. Weil jeweils Flüssigkeitssäulen beschleunigt aber auch verzögert werden, führt dies auf der Saugseite, wie auch auf der Druckseite zu weitgehend sinusartigen Momentandruckverläufen, die in Abhängigkeit von der konkreten Ausführung in Details abgeändert oder auch überlagert sein können. Um unerwünschte Wirkungen der prinzipbedingt schwankenden Momentandruckverläufe zu kompensieren, wird eine Pulsationsdämpfungseinheit vorgesehen.

Beispielsweise ist es aus der DE 34 14 558 bekannt, einen Membrandämpfer mit einer Metallmembran zur Pulsationsdämpfung heranzuziehen. Herkömmliche Membrandämpfer mit einer eingespannten Elastomermembran können unter dem Nachteil leiden, dass diese verschleißbehaftet sind, so dass deren Wirkung mit steigender Lebensdauer abnimmt. Die Federeigenschaften sind davon abhängig, wie schnell die Beanspruchung erfolgt (dynamische Verhärtung). Folglich leiden diese an einem nichtlinearen Verhalten.

Aus der DE 10 2005 028 562 A1 ist ein Brems-Hydraulikaggregat umfassend einen hermetisch geschlossenen Metallhohlkörper zu Dämpfungszwecken bekannt geworden.

Die DE 43 11 263 A1 offenbart bereits eine Dämpfungseinrichtung mit einer Pulsationsdämpfungskapsel der gattungsbildenden Art, wobei ein erster Hohlraum zur Aufnahme von hydraulischem Druckmittel sowie ein zweiter, evakuierter Hohlraum vorgesehen ist, der mittels einer elastischen Metallmembran vom ersten Hohlraum getrennt ist. Durch den evakuierten zweiten Hohlraum ist sichergestellt, dass bei einer Undichtigkeit des zweiten Hohlraums kein Lufteintrag in den ersten Hohlraum erfolgt.

Aus WO 01/76926 A1 geht ein Schwingungsdämpfer mit einer Membrane hervor, die mit ihrem Rand an einem Bremskolben eines Bremssattels einer Fahrzeugbremse befestigt ist, wobei die Membrane mit einer weiteren Membrane zu einer Membraneinheit zusammengefasst ist, die im Randbereich der beiden Membranen Stege aufweisen, die in einer Nut des Bremskolbens befestigt sind.

Aus DE 103 53 841 A1 ist ein aus einem Edelstahlblech zu einer Dose geformter Dämpfungskörper bekannt, der mittels eines Adapters an der Bodenfläche eines Kolbens befestigt ist, um Druckstöße im Druckmittelkreislauf eines Bremssystems aufnehmen zu können.

Ferner offenbart die DE 195 39 779 A1 eine Speicherkammer zur Aufnahme von Bremsflüssigkeit einer hydraulischen Fahrzeugbremsanlage, wobei die Speicherkammer mittels eines Verschlussdeckels verschlossen ist und in ihrem Innenraum eine luftgefüllte, kompressible Hohlkugel aufnimmt, die unter Beaufschlagung mit Bremsflüssigkeit eine selbstrückstellende Einrichtung bildet.

Die Aufgabe der vorliegenden Erfindung besteht darin, eine sowohl beanspruchungsgerecht dimensionierte, als auch einfach herstellbare, hochdruckfeste Pulsationsdämpfungsvorrichtung bereit zu stellen, deren Pulsationsdämpfungswirkung besonders einfach an die herrschenden Randbedingungen angepasst werden kann.

Die Aufgabe wird für eine Pulsationsdämpfungskapsel der gattungsbildenden Art mit den kennzeichnenden Merkmalen des Patentanspruchs 1 gelöst.

Weitere Einzelheiten der Erfindung gehen aus Unteransprüchen zusammen mit der Beschreibung anhand von Zeichnungen hervor.

In den Zeichnungen zeigen:
Fig. 1 schematisch sowie teilweise eine elektrohydraulische Fahrzeugbremsanlage,
Fig. 2 eine Pulsationsdämpfungskapsel im Schnitt im unbelasteten Zustand sowie vergrößert,
Fig. 3 eine Pulsationsdämpfungskapsel wie in Fig. 1 jedoch belastet,
Fig. 4 eine andere, nicht zur beanspruchten Erfindung gehörende Ausführungsform der Pulsationsdämpfungskapsel im Schnitt,
Fig. 5 eine andere Ausführungsform der Pulsationsdämpfungskapsel mit Strukturierung, vergrößert sowie im Schnitt,
Fig. 6 eine verkleinerte, perspektivische Ansicht der Pulsationsdämpfungskapsel nach Fig. 5,
Fig. 7 teilweise eine Pulsationsdämpfungskapsel wie in Fig. 5 unter Verdeutlichung mechanischer Spannungen,
Fig. 8 teilweiser Schnitt durch einen hydraulischen Aufnahmekörper mit Pulsationsdämpfungskammer und mehreren eingefügten Pulsationsdämpfungskapseln,
Fig. 9 Schaubild zur Bildung von einem Montageverbund (Stack) mehrerer Pulsationsdämpfungskapseln unter Nutzung von Haltemitteln,
Fig. 10 perspektivische Ansicht von einem Verbund mehrerer Pulsationsdämpfungskapseln,
Fig. 11 perspektivische Ansicht von einem Verbund mehrerer Pulsationsdämpfungskapseln mit abgewandelten Haltemitteln,
Fig. 12 perspektivische Ansicht von einem Verbund mehrerer Pulsationsdämpfungskapseln mit abgewandelten Haltemitteln,
Fig. 13 perspektivische Ansicht von einem Verbund mehrerer Pulsationsdämpfungskapseln mit abgewandelten Haltemitteln, und
Fig. 14 , 15 nicht zur beanspruchten Erfindung gehörend jeweils schematisch und nicht maßstäblich weitere Ausführungsformen einer Pulsationsdämpfungskapsel im Schnitt, und
Fig. 16 eine teilweise schematische Gegenüberstellung der Anforderungen und des tatsächlichen Druck-Volumenverhaltens von unterschiedlich ausgeführten Pulsationsdämpfungskapseln.

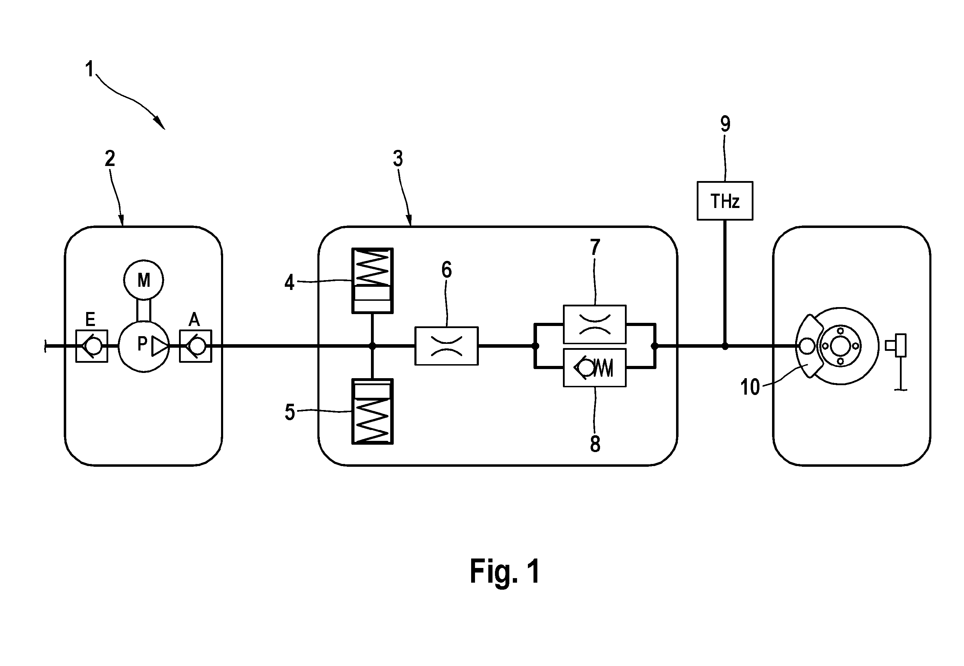

Fig. 1 verdeutlicht sehr schematisch vereinfacht sowie unter Weglassung von Details und elektrohydraulischer Ventile eine elektronisch geregelte Fahrzeugbremsanlage 1. mit einem Motor-Pumpen-Aggregat 2 mit einer Pumpe P, umfassend einen Druckmitteleingang E und einen Druckmittelausgang A, wobei im Anschluss an den Druckmittelausgang A eine Dämpfungsvorrichtung 3 enthaltend mehrere, in Kaskade geschaltete, Dämpfungsmittel 4,5,6,7,8 unter Beteiligung von wenigstens einer Dämpfungskammer vorgesehen ist. Der Druckmittelausgang A ist, wie schematisch verdeutlicht, je nach erforderlicher Funktion mit einem Hauptzylinder 9 (THZ) oder mit einer Radbremse 10 verbindbar. Die Dämpfungsmittel 4-8 sind prinzipiell zusammen mit der Pumpe P in einem gemeinsamen Aufnahmekörper 35 angeordnet. Die sinnbildlich durch Piktogramme dargestellten verschiedenen Dämpfungsmittel 4,5,6,7,8 umfassen beispielhaft eine oder mehrere Dämpfungskammern, Blenden sowie eine sinnbildlich veranschaulichte Elastizität 4,5 enthaltend eine oder mehrere Pulsationsdämpfungskapseln 11,11',11" oder -zellen, die eine derartige Kompressiblität aufweisen, dass ein bestimmtes Hydraulikvolumen innerhalb einer Dämpferkammer aufgenommen werden kann.

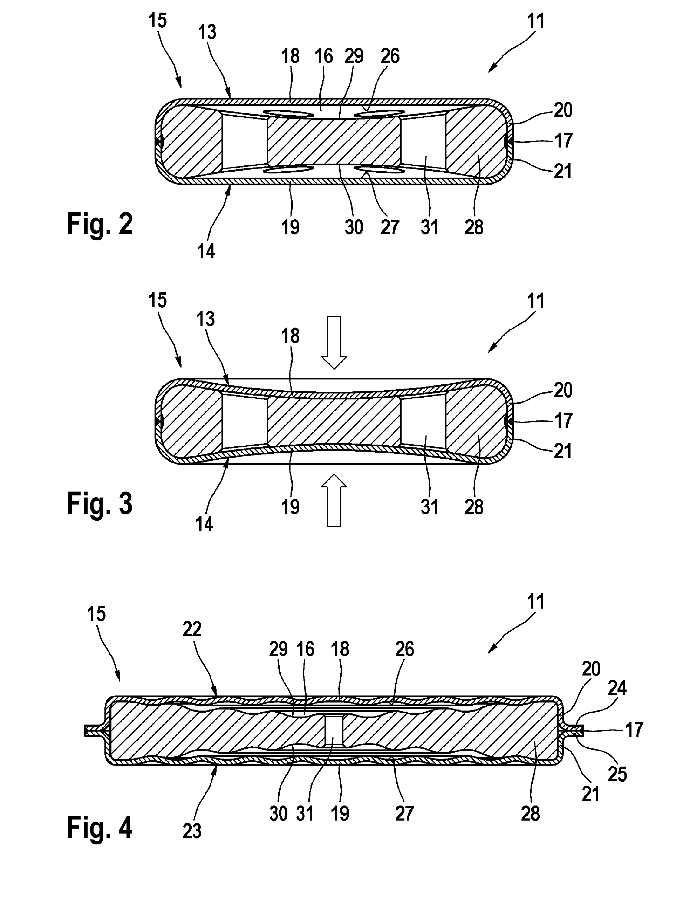

Die Fig. 2 verdeutlicht im Einzelnen eine Pulsationsdämpfungskapsel 11 zum Einsatz innerhalb einer hydraulisch beaufschlagten Pulsationsdämpfungskammer 12. Die Pulsationsdämpfungskapsel 11 umfasst ein, aus zwei, bevorzugt konkaven, Halbschalen 13,14 hermetisch dicht gefügtes, Metallmembrangehäuse 15. Obwohl die Halbschalen spanlos umgeformt werden, kommt mit Vorteil ein aushärtbarer, rostfreier Metallwerkstoff, wie insbesondere Federstahl vom Typ 1.4568 mit einer Wandstärke von nur etwa wenigen Zehntelmillimetern (beispielhaft etwa 0,1 mm Wandstärke) zum Einsatz. Durch die gebildete dünne Membran wird ein dauerfester, hermetisch abgedichteter Innenraum 16 geschaffen, welcher vom umgebenden, meist niederfrequent pulsierenden Druckmittel (Anregungsfrequenz etwa kleiner 33 Hz) der Pulsationsdämpfungskammer 12 abgetrennt ist.

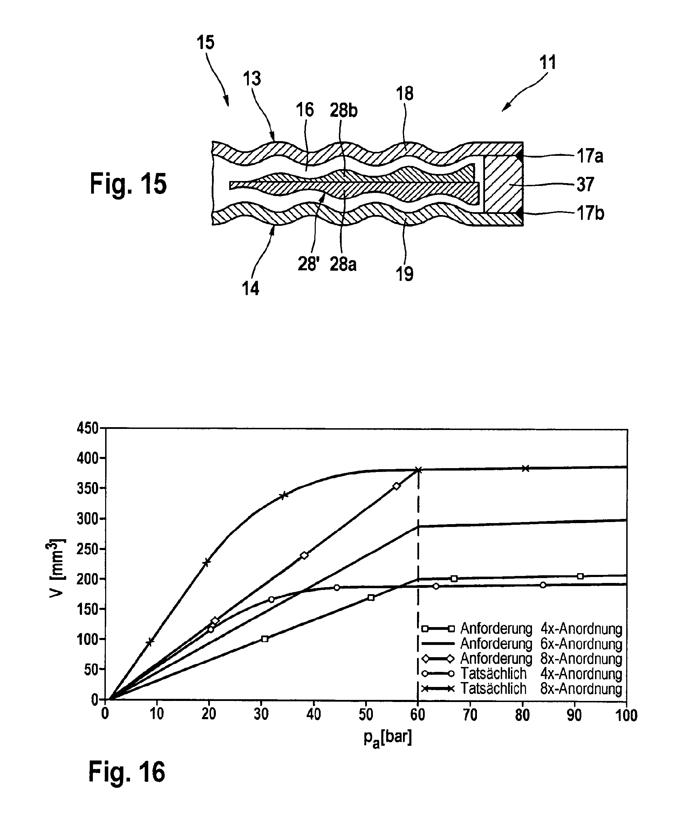

Die Halbschalen 13,14 sind entlang einer Umfangsnaht 17 stoffschlüssig derart miteinander verbunden, dass eine pulsierende Druckmittelwirkung eine elastische Kompression oder Expansion der Pulsationsdämpfungskapsel 11 bewirkt, unter deren Wirkung der Innenraum 16 verkleinert oder vergrößert wird. Folglich dient die mit wenigstens einer Pulsationsdämpfungskapsel gefüllte Pulsationsdämpfungskammer 12 dazu, innerhalb eines vorgegebenen Druck-Arbeitsbereiches gemäß Fig. 16 - mit steigendem Druckmitteldruck pₐ eine weitgehend linear wachsende Druckmittelvolumenaufnahme V bis etwa maximal 400 mm³ zu erzielen. Dazu ist der Fig. 16 eine Übersicht über die unterschiedlichen Zielvorgaben (Target) und die unterschiedlichen, konkreten Messergebnisse (Actual) mit 4-fach, 6-fach oder 8-fach-Anordnungen (Stacks) der Pulsationsdämpfungskapseln zu entnehmen. Der vorgegebene Druck-Arbeitsbereich mit anderen Worten der Betriebsdämpfungsbereich verläuft stets bis etwa 60 bar Druckmitteldruck pₐ. Weil der erzeugte Druckmitteldruck pₐ innerhalb von Fahrzeugbremsanlagen jedoch bis auf über etwa 200 bar wachsen kann, wird über der definierten, oberen Grenze des vorgesehenen Druck-Arbeitsbereiches eine konstante Volumenaufnahme gefordert, ohne dass Überschreitungen irreversible Schäden hervorrufen können. Dies wird im Wesentlichen dadurch erreicht, dass eine weitere Volumenaufnahme durch eine integrierte Anschlagfunktion definiert beendet ist.

Jede Halbschale 13,14 ist bevorzugt napfförmig mit einem membranartigen Boden 18,19 sowie mit einer etwa rechtwinklig vom Boden 18,19 abgewinkelten Wandung 20,21 ausgebildet. Jeweils zwei identisch geformte Halbschalen 13,14 sind unmittelbar direkt, sowie spiegelbildlich Stoß-auf-Stoß, mit ihrer Wandung 20,21 aufeinander gelegt. Zur hermetischstoffschlüssigen Verbindung der Halbschalen 13,14 ist gemäß Fig. 2 die den Außenumfang bildende, Umfangsnaht 17 vorgesehen. Wie zu ersehen ist, geht die Umfangsnaht 17 im wesentlichen nicht in Radialrichtung über die Wandung 20,21 hinaus, sondern ist im Wesentlichen vollständig glatt in den Verlauf der Wandung 20,21 eingefügt.

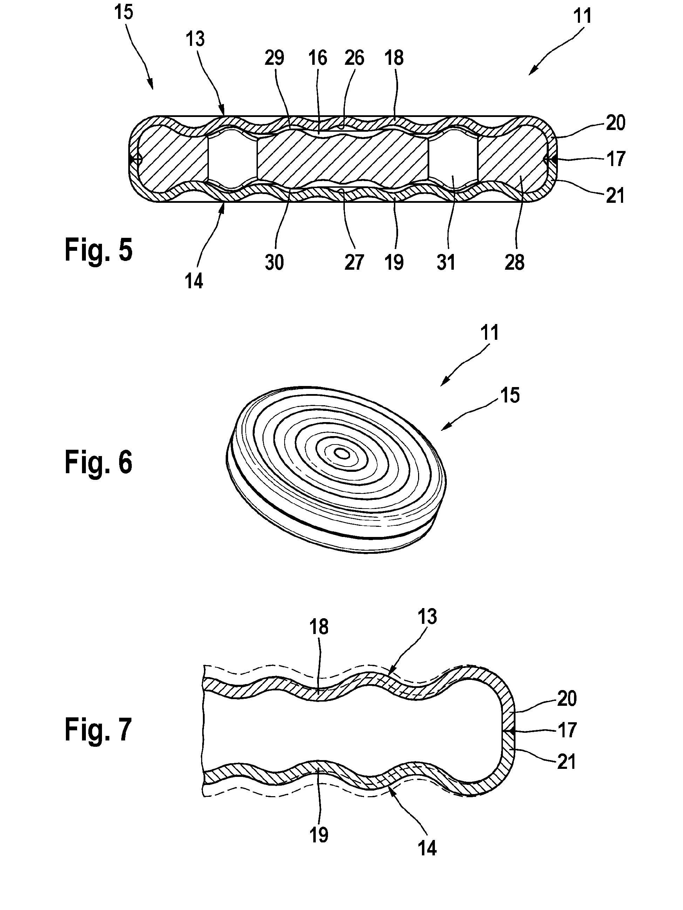

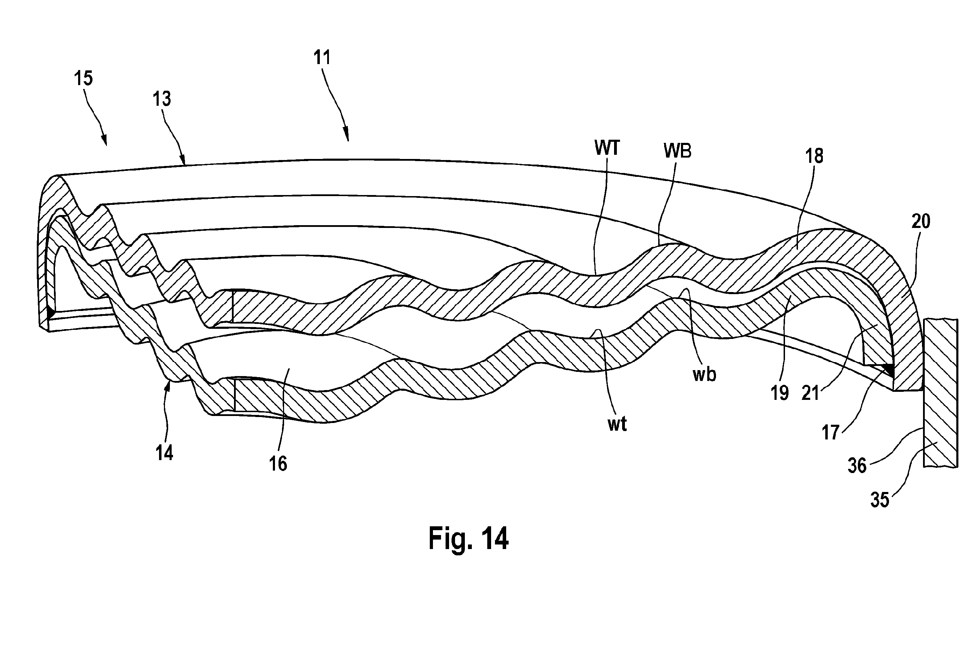

Die Ausgestaltung nach Fig. 4, welche nicht zur beanspruchten Erfindung gehört, differiert von dem vorstehenden Vorschlag, indem jede Halbschale 22,23 einen einstückig angeformten Flanschabschnitt 24,25 aufweist, welcher im Wesentlichen rechtwinklig zur Wandung 20,21 sowie nach radial außen weisend abgewinkelt ist. Die Umfangsnaht 17 ist von radial außen zwischen den zwei gesonderten Flanschabschnitten 24,25 platziert. Durch diese Maßnahme ist die Schweißnaht in Hinblick auf Wechselbeanspruchung und insbesondere vor schädlichen Zugbeanspruchungen besonders geschützt platziert. Weiterhin ist aus Fig. 4 wie auch aus den weiteren Figuren 5 - 13 ersichtlich, dass die Halbschalen 22,23 besonders im Bereich von dem Boden 18,19 mit einer Profilierung, insbesondere mit einer rotationssymmetrischen, wellenförmigen Profilierung versehen sind. Im Unterschied zu den Ausführungsformen nach Fig. 4 bis 8 kann die Wellenform der Profilierung gemäß einer abgewandelten, nicht zur beanspruchten Erfindung gehörenden Ausführungsform nach Fig. 14 so ausgebildet sein, dass sich diese - zur weitgehend vollständigen Kompression einer Pulsationsdämpfungskapsel 11 - weitestgehend ineinander schmiegen(Fig. 14). Dazu ist jeweils einem Wellenberg Wb einer oberen Halbschale 13 ein Wellenberg wb einer unteren Halbschale 14 zugeordnet, und umgekehrt (Wellentäler WT/wt). Eine weitere Besonderheit besteht darin, dass die Halbschalen 13,14;22,23 unterschiedliche Durchmesser aufweisen können, so dass jeweils eine der Halbschalen 13,14;22,23 gewissermaßen in eine durchmessergrößere Halbschale eingelegt und dadurch für einen Fertigungsprozess - ohne gesonderte Haltevorrichtung - gewissermaßen vorläufig positioniert ist. Vergleichbar der Ausführungsform nach Fig. 4 ergibt sich dadurch eine besonders beanspruchungsgerechte Platzierung der Umfangsnaht 17. Die Wandung 20,21 ist einheitlich orientiert sowie rechtwinklig zum Boden 18,19 abgekröpft, und mit einer axial gerichteten Umfangsnaht 17 versehen. Diese Gestaltung verfügt über den Vorteil, dass es die einheitlich abgewinkelte Wandung 20,21 ermöglicht, eine Pulsationsdämpfungskapsel mittels federnder Klemmwirkung in eine entsprechend dimensionierte Bohrung 36 fest einzufügen, wobei die Umfangsnaht vor Beschädigung durch einen Einpressvorgang geschützt ist. Eine radiale Druckmittelumspülung wird ermöglicht, indem gesonderte Kanäle in der Bohrung 36 vom Aufnahmekörper 35 vorgesehen sein können.

Wie kurz erläutert wurde, erfordert eine Applikation in einem elektronisch geregelten Fahrzeugbremssystem grundsätzlich ein besonders abgestimmtes Druck-/Volumenaufnahmeverhalten der Dämpfungsvorrichtung 3. In diesem Zusammenhang kann es erforderlich sein, dass eine Volumenaufnahme in Relation zum herrschenden Druck anfänglich linear mit zunehmendem Druck anwächst, und dass diese Volumenaufnahme ab einer vorgegebenen Volumenaufnahme konstant bleibt. Zu diesem Zweck weist jede Pulsationsdämpfungskapsel 11 wenigstens ein integriertes Mittel auf, das geeignet ist, das Ausmaß einer elastischen Kompression zu begrenzen. Mit anderen Worten wird durch das integrierte Mittel, das durch die Formgebung der Schalen selbst, also ohne gesonderte Bauteile, definiert sein kann, sicher gestellt, dass keine weitere Kompression der Pulsationsdämpfungskapsel/Zelle eintritt, so dass Deformation und Volumenaufnahme oberhalb bestimmter Drücke mechanisch limitiert (konstant gehalten) sind.

Gemäß einer bevorzugten Variante ist das integrierte Mittel als integriertes Anschlagmittel ausgebildet, wobei jeder innenraumseitige Boden 18,19 zur Ausbildung von dem integrierten Anschlagmittel im Sinne einer Anschlagfläche 26,27 ausgebildet ist. Indem der Boden 18,19 gewissermaßen eine Doppelfunktion erfüllt, die darin besteht, dass nicht nur eine hermetische Innenraumbegrenzung, sondern auch durch unmittelbar direkten, metallischen Anschlag der benachbarten Böden 18,19 eine Limitierung der Volumenaufnahme geleistet wird, ist der apparative und herstellungstechnische Aufwand minimiert.

In Abwandlung einer unmittelbar direkten Anschlagfunktion von zwei unmittelbar direkt benachbarten Böden 18,19 kann gemäß einer anderen bevorzugten Lösung vorgesehen sein, dass als integriertes Mittel ein inkompressibles Medium und additiv dazu ein kompressibler Füllkörper 28, beispielsweise aus Elastomerwerkstoff im Innenraum 16 von der Dämpfungskapsel 11 vorgesehen ist, welcher deckungsgleich zu einem benachbarten, strukturierten, insbesondere wellenförmig strukturierten Boden ebenfalls eine Strukturierung, bevorzugt Wellenberge und Wellentäler aufweisen kann. Wenn ein vollständig inkompressibler Füllkörper 28 oder ein vollständig inkompressibles Medium vorgesehen ist, soll der Innenraum 16 lediglich teilweise damit ausgefüllt sein, damit auf anderem Wege Kompressiblität zur Volumenspeicherung vorliegt. Wenn dagegen eine kompressible Füllung von definiert voreingestellter Elastizität vorliegt, kann der Innenraum 16 durchaus vollständig ausgefüllt sein.

Zur Einstellung des vorbestimmten Druck/Volumenverhaltens, wie auch um eine unzulässige Deformation oder Beanspruchung der Halbschalen 13,14;22,23 zu vermeiden, kann ein unstrukturierter Füllkörper 28 zur Unterstützung von der Wandung 20,21 in diesem Bereich im Wesentlichen vollständig an den Halbschalen 13,14; 22,23 anliegen. Weitere Flächen vom Füllkörper 28 sind mit Abstand zum Boden 19,20 vorgesehen, so dass der Boden 19,20 gewissermaßen elastisch einfedern kann. Zur Begrenzung dieser elastischen Verformung dienen die, den Anschlagflächen 26,27 zugeordneten Anschlagflächen 29,30 am Füllkörper 28.

Prinzipiell kann der Füllkörper 28 eine oder mehrere Ausnehmungen 31 aufweisen, die prinzipiell als Durchgangsbohrung parallel zur Längsachse ausgebildet sind, und eine Mediumaufnahme oder eine Deformation vom Füllkörper 28 selbst unterstützen zu können. Mit Vorteil ist der Füllkörper 28 metallisch, aus Gummi oder Kunststoff ausgebildet, sowie als Einlegeteil zwischen den Halbschalen 13,14;22,23 vormontiert. Dies kann dadurch geschehen, dass der Füllkörper 28 derart fest an einer Halbschale 13,14;22,23 angeheftet oder befestigt ist, dass Klappergeräusche vermieden werden. Gleiches gilt übrigens auch für zueinander benachbarte Pulsationsdämpfungskapseln 11, beziehungsweise für das Verhältnis zwischen Pulsationsdämpfungskapseln 11 und Aufnahmekörper 35.

Aus der gegebenen Kapselkonstruktion ergibt sich tendenziell, dass der Randbereich vergleichsweise wenig Volumenaufnahme ermöglicht, während maximale elastische Deformation vorwiegend im Zentrum vom Boden der Halbschalen auftritt. Die nachstehenden Maßnahmen dienen zur Verbesserung der gesamten Volumenaufnahme durch Verbesserung der randseitigen Elastizität. Dazu ist bei einer Ausführungsform einer Pulsationsdämpfungskapsel 11 mit wellenförmig strukturiertem Füllkörper 28' gemäß Fig. 15, dieser derart segmentiert in zumindest zwei zueinander parallel verschiebbaren Teilen 28a, 28b ausgebildet, so dass Toleranzen von benachbarten Bauteilen, insbesondere Toleranzen in der Wellenstruktur benachbarter Bauteile und/oder beim elastischen Einfedervorgang der Böden 18,19 ausgeglichen werden können. Ein weiterer Vorteil besteht darin, dass die randseitige Entkopplung (Entfall der randseitig festen Einspannung des Füllkörpers 28') eine maßgeblich erhöhte Volumenaufnahme bewirkt. Die konkrete Abbildung unterscheidet sich auch dadurch von den vorstehend beschriebenen Ausführungsformen, dass die wellenförmig strukturierten Böden 18,19 unter Verwendung von einem zwischengelegten Abstandskörper, nämlich einem zylindrischen Ring 37 - der prinzipiell entweder aus Metallwerkstoff oder im Sinne eines weiteren Federelementes aus Elastomerwerkstoff ausgebildet sein kann, was die Volumenaufnahme der Pulsationsdämpfungskapsel 11 weiter erhöht. Das Ganze kann durch zwei Umfangsschweißnähte 17a, 17b zusammen gefügt sein. In Radialrichtung ist zwischen Außenumfang vom Füllkörper 28' - respektive dessen Teilen 28a,28b - und dem Ring 37 Spiel vorgesehen, so dass sich der Füllkörper 28' zur optimalen Abstützung an die Böden 18,19 anpassen kann.

In weiterer Abwandlung einer Pulsationsdämpfungskapsel 11 kann es vorgesehen sein, dass der Innenraum 16 zwecks Gestaltung des vorgegebenen Druck/Volumenverhaltens mit einem Vakuum, mit einer Luft- oder Gasfüllung, oder mit einer Flüssigkeit versehen ist.

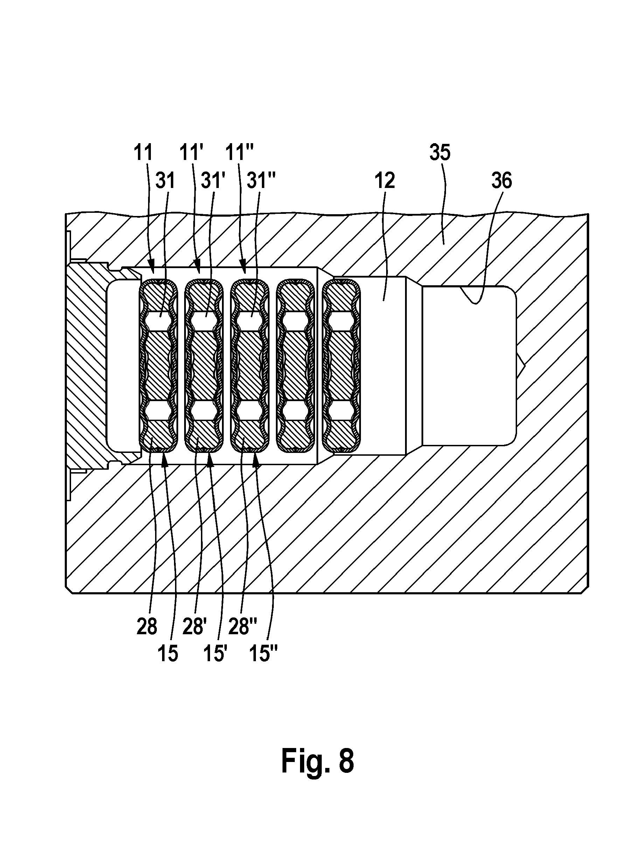

Weitere Ausführungsformen der Erfindung bestehen darin, dass mehrere identisch ausgebildete Pulsationsdämpfungskapseln 11,11',11" gemeinsam innerhalb einer Pulsationsdämpfungskammer 12 angeordnet sind. Dabei ist es als Alternative zu einer losen Platzierung der einzelnen Pulsationsdämpfungskapseln 11,11',11" innerhalb der Pulsationsdämpfungskammer 12 besonders vorteilhaft, wenn eine Gruppierung oder Bündelung mehrerer identischer Pulsationsdämpfungskapseln 11,11',11" vorgesehen ist, so dass gewissermaßen lediglich ein vormontiertes Modul in die Pulsationsdämpfungskammer 12 einzulegen ist, und dass jedes Bündel wenigstens ein Haltemittel 32 aufweist, das zur gerichteten Halterung und Platzierung der Pulsationsdämpfungskapseln 11,11',11" vorgesehen ist. Grundgedanke einer derartig geplanten Anordnung ist es, einen definierten Abstand zwischen den Pulsationsdämpfungskapseln 11,11',11" vorzusehen, der eine Entlüftung des Bremssystems verbessert. Die Einheit kann unter Hinzufügung von einem Bohrungsverschluß für die Pulsationsdämpfungskammer 12 wie in Fig. 8 gebildet sein. Jedes Haltemittel 32 ist einstückig mit oder gesondert zu den Pulsationsdämpfungskapseln 11,11',11" angeordnet. Es ist generell möglich dass das Haltemittel 32 mit einem oder mit mehreren Pulsationsdämpfungskapseln 11,11',11" form-, stoff- und/oder kraftschlüssig verbunden ist.
Jedes Haltemittel 32 gewährleistet einen Zusammenhalt zwischen den zusammengefügten Pulsationsdämpfungskapseln 11,11,11". In diesem Zusammenhang ist es möglich, jedes Haltemittel 32 als metallische Bandage aus Blech und/oder Draht auszubilden, welche insgesamt um alle zu bündelnden Zellen geführt ist.

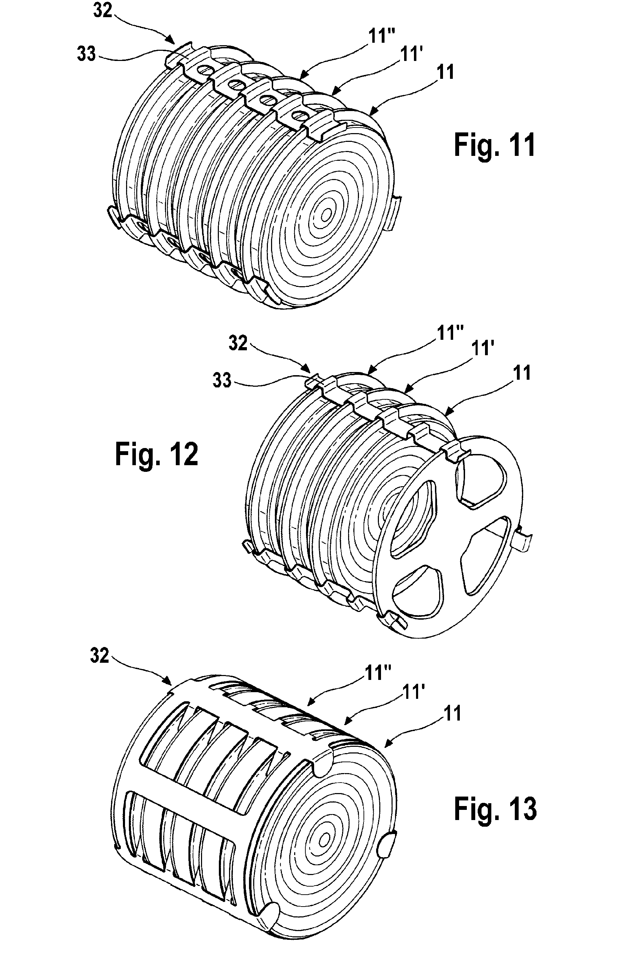

Eine graduelle Abwandlung dieses Prinzips besteht darin, dass Haltemittel 32 aus weitgehend streifenförmigem Blechwerkstoff mit mehreren Aufnahmen 33 bestehen, welche insbesondere an dem Flanschabschnitt 24 der Pulsationsdämpfungskapseln 11,11',11" angreifen, wie aus den Figuren 11 und 12 hervorgeht. Auf diese Weise ist sichergestellt, dass die einzelnen Pulsationsdämpfungskapseln 11,11',11" in einem definierten Abstand zueinander angeordnet sind, was eine Entlüftung und eine nachgeschaltete Druckmittelbefüllung eines Aufnahmekörpers 35 vereinfacht.

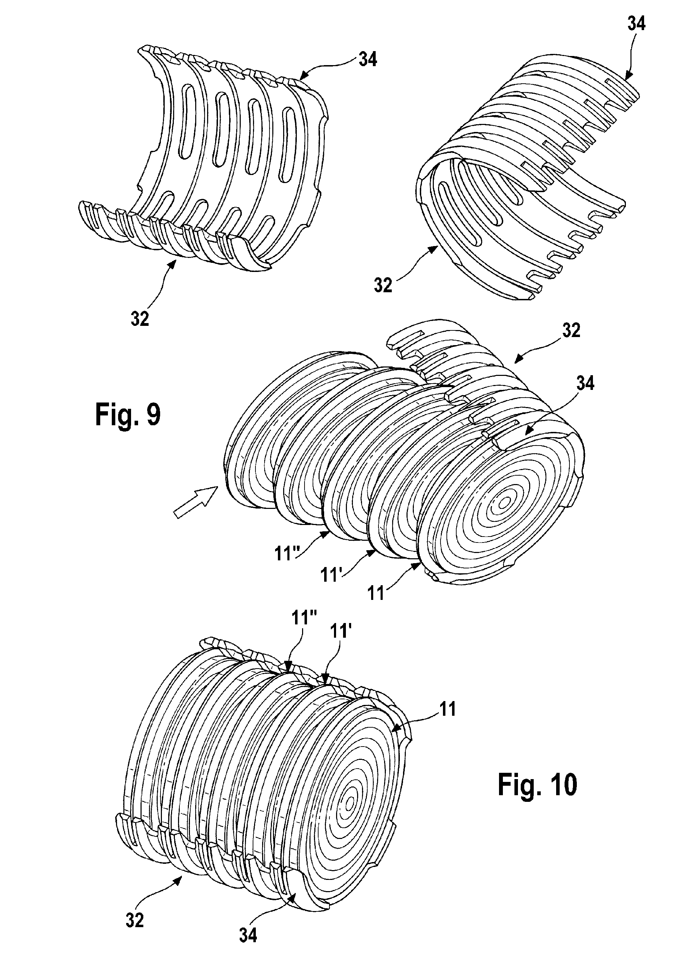

Es ist weiterhin denkbar, dass jedes Haltemittel 32 als weitestgehend geschlitzter Rohrkörper vorgesehen ist, welcher radial außen angreifende Aufnahmen 34 für die Pulsationsdämpfungskapseln 11,11',11" aufweisen, so dass diese in vorgegebenem regelmäßigem Abstand zueinander definiert platziert sind. Derartige Haltemittel 34 können mit Vorteil aus elastischem Kunststoffwerkstoff ausgebildet sein, um eine elastische Montage- oder Demontage zu ermöglichen, wie aus dem Fig. 9 und 10 hervorgeht.

Es ist prinzipiell vorteilhaft, mehrere identisch ausgebildete Haltemittel 32 vorzusehen, um einen kostengünstigen Mengeneffekt zu erzielen.

In weiterer Ausgestaltung des vorliegenden Grundgedankens einer modularen Anpassung einer Dämpfungscharakteristik kann es sinnvoll und erforderlich sein, einer oder mehreren Pulsationsdämpfungskapsel(n) 11,11",11" ein zusätzliches Federelement, wie insbesondere eine einzelne Halbschale hinzuzufügen, ohne das Wesen der Erfindung zu verlassen. Es versteht sich, dass diese gesonderte Halbschale - genauso wie die restlichen Pulsationsdämpfungskapseln 11',11" zur Montagevereinfachung im Aufnahmekörper 35 ein Bestandteil einer vormontierten und selbständig handhabbaren Gruppierung sein darf.

Obwohl die Erfindung primär am Beispiel einer Applikation bei einer elektronisch geregelten Fahrzeugbremsanlage erläutert worden ist, sind andersartige Anwendungen möglich, ohne den Grundgedanken der Erfindung zu verlassen.

### Bezugszeichenliste

- 1: Fahrzeugbremsanlage
- 2: Motor-Pumpen-Aggregat
- 3: Dämpfungsvorrichtung
- 4: Dämpfungsmittel
- 5: Dämpfungsmittel
- 6: Dämpfungsmittel
- 7: Dämpfungsmittel
- 8: Dämpfungsmittel
- 9: Hauptzylinder (THz)
- 10: Radbremse
- 11,11',11": Pulsationsdämpfungskapsel
- 12: Pulsationsdämpfungskammer
- 13: Halbschale
- 14: Halbschale
- 15: Metallmembrangehäuse
- 16: Innenraum
- 17, 17a,b: Umfangsnaht
- 18: Boden
- 19: Boden
- 20: Wandung
- 21: Wandung
- 22: Halbschale
- 23: Halbschale
- 24: Flanschabschnitt
- 25: Flanschabschnitt
- 26: Anschlagfläche
- 27: Anschlagfläche
- 28, 28': Füllkörper
- 28a,b: (Füllkörper)Segment
- 29: Anschlagfläche
- 30: Anschlagfläche
- 31: Ausnehmung
- 32: Haltemittel
- 33: Aufnahme
- 34: Aufnahme
- 35: Aufnahmekörper
- 36: Bohrung
- 37: Ring

- E: Druckmitteleingang
- A: Druckmittelausgang
- P: Pumpe
- M: Motor
- WB, wb: Wellenberg
- WT, wt: Wellental

## Patentansprüche

1. Pulsationsdämpfungskapsel (11,11',11"), umfassend wenigstens ein aus wenigstens zwei Schalen hermetisch dicht gefügtes Metallmembrangehäuse, das einen Innenraum (16) von einem umgebenden Druckmittel trennt, wobei die Schalen entlang einer Umfangsnaht (17) stoffschlüssig derart miteinander verbunden sind, dass die Pulsationsdämpfungskapsel (11,11',11") infolge Druckmittelwirkung, insbesondere infolge Druckmittelpulsation, als Energiespeicher elastisch komprimierbar sowie expandierbar ist, **dadurch gekennzeichnet, dass** die zwei Schalen als konkave Halbschalen (13,14;22,23) ausgebildet sind, wobei jede Halbschale (13,14;22,23) napfförmig mit einem Boden (18,19) sowie mit einer etwa rechtwinklig vom Boden (18,19) abgewinkelten Wandung (20,21) versehen ist, dass jeweils zwei identisch geformte Halbschalen (13,14;22,23) direkt, sowie spiegelbildlich Stoß-auf-Stoß mit ihrer Wandung (20,21) aneinander anschließen und dass die Umfangsnaht (17) zur Verbindung der benachbarten Wandungen (20,21) der Halbschalen (13,14;22,23) vorgesehen ist.

2. Pulsationsdämpfungskapsel (11,11',11") nach Anspruch 1, **dadurch gekennzeichnet, dass** die Pulsationsdämpfungskapsel in Abhängigkeit vom Druck des umgebenden Druckmittels eine zumindest teilweise lineare Volumenaufnahme aufweist.

3. Pulsationsdämpfungskapsel (11,11',11") nach Anspruch 2, **dadurch gekennzeichnet, dass** die Pulsationsdämpfungskapsel ausschließlich innerhalb von einem vorgegebenen Druck-Arbeitsbereich eine lineare Volumenaufnahme aufweist, und dass oberhalb von dem vorgegebenen Druck-Arbeitsbereich eine konstante Volumenaufnahme vorgesehen ist.

4. Pulsationsdämpfungskapsel (11,11',11") nach Anspruch 1, **dadurch gekennzeichnet, dass** die Pulsationsdämpfungskapsel (11,11',11") ein integriertes Mittel, insbesondere ein integriertes Anschlagmittel, aufweist, das eine federelastische Komprimierung begrenzen.

5. Pulsationsdämpfungskapsel (11,11',11") nach Anspruch 4, **dadurch gekennzeichnet, dass** jeder Boden (18,19) innenraumseitig zur Ausbildung vom integrierten Anschlagmittel als Anschlagfläche (26,27) ausgebildet ist.

6. Pulsationsdämpfungskapsel (11,11',11") nach Anspruch 4, **dadurch gekennzeichnet, dass** als integriertes Mittel ein Medium und/oder ein Füllkörper (28) vorgesehen ist, welcher den Innenraum (16) für die Anschlagfunktion zumindest teilweise ausfüllt.

7. Pulsationsdämpfungkapsel (11,11',11") nach Anspruch 6, **dadurch gekennzeichnet**, der Füllkörper (28) im Bereich von der Wandung (20,21) im Wesentlichen vollständig an den Halbschalen (13,14;22,23) anliegt, und dass der Füllkörper (28) mit Abstand zum benachbarten Boden (18,19) eine Anschlagfläche (29,30) aufweist.

8. Pulsationsdämpfungkapsel (11,11',11") nach Anspruch 6, **dadurch gekennzeichnet, dass** der Füllkörper (28) eine oder mehrere Ausnehmungen (31) aufweist.

9. Pulsationsdämpfungkapsel (11,11',11") nach einem der Ansprüche 6 bis 8, **dadurch gekennzeichnet, dass** der Füllkörper (28) metallisch oder aus Kunststoff ausgebildet, sowie als Einlegeteil vorgesehen ist.

10. Pulsationsdämpfungskapsel (11,11',11") nach Anspruch 6, **dadurch gekennzeichnet, dass** als Medium eine Gasfüllung, oder eine Flüssigkeit vorgesehen ist.

11. Pulsationsdämpfungkapsel (11,11',11") nach Anspruch 1, **dadurch gekennzeichnet, dass** die Halbschalen (13,14;23,24) eine Profilierung, insbesondere eine rotationssymmetrische Profilierung, aufweisen.

12. Pulsationsdämpfungsmodul **gekennzeichnet durch** mehrere, im Wesentlichen identische Pulsationsdämpfungskapseln (11,11 ',11"), die als Energiespeicher vorgesehen sind, nach wenigstens einem der vorhergehenden Ansprüche 1 bis 11, wobei die Pulsationsdämpfungskapseln (11,11',11") lose oder als Bündel in einem gebildeten Verbund zur Pulsationsdämpfung vorgesehen sind.

13. Pulsationsdämpfungsmodul nach Anspruch 12, **dadurch gekennzeichnet, dass** das Bündel der Pulsationsdämpfungskapseln (11,11',11") innerhalb einer Pulsationsdämpferkammer (12) eines Aufnahmekörpers (35) eines Hydraulikaggregates, insbesondere innerhalb einer Dämpferkammer einer elektronisch geregelten Fahrzeugbremsanlage (1), platziert ist, wobei diese in einen Saugpfad oder in einen Druckpfad einer Pumpe (P) integriert vorgesehen ist.

14. Pulsationsdämpfungsmodul nach Anspruch 12, **dadurch gekennzeichnet, dass** jedes Bündel Haltemittel (32) aufweist, die zur gerichteten Halterung und Platzierung der Pulsationsdämpfungskapseln (11,11',11") vorgesehen sind.

15. Pulsationsdämpfungsmodul nach Anspruch 14, **dadurch gekennzeichnet, dass** die Haltemittel (32) als metallische Bandage aus Blech und/oder Draht ausgebildet sind, und dass eines oder mehrere der Pulsationsdämpfungskapseln (11,11',11") mit den Haltemitteln (32) verschweißt ist.

16. Pulsationsdämpfungsmodul nach Anspruch 14 oder 15, **dadurch gekennzeichnet, dass** jedes Haltemittel (32) als gesondertes Bauteil vorgesehen ist, dass das Bauteil Aufnahme- und Haltemittel (33,34) für mehrere Pulsationsdämpfungskapseln (11,11',11") aufweist, und dass die Aufnahme- und Haltemittel (33,34) federnd, im Wesentlichen von radial außen, an den Wandungen (20,21) der Pulsationsdämpfungskapseln (11,11',11") angreifen.

17. Pulsationsdämpfungsmodul nach wenigstens einem der Ansprüche 14 bis 16, **dadurch gekennzeichnet, dass** mehrere identisch ausgebildete Haltemittel (32) vorgesehen sind.

## Claims

1. Pulsation damping capsule (11, 11', 11"), comprising at least one metal diaphragm housing which is joined in a hermetically sealed manner from at least two shells and separates an inner space (16) from a surrounding pressure medium, the shells being connected to one another along a circumferential seam (17) with a material to material fit in such a way that the pulsation damping capsule (11, 11', 11") can be elastically compressed and expanded as an energy accumulator as a consequence of pressure medium action, in particular as a consequence of pressure medium pulsation, **characterized in that** the two shells are formed as concave half shells (13, 14; 22, 23), each half shell (13, 14; 22, 23) being provided in a bowllike manner with a bottom (18, 19) and with a wall (20, 21) which is angled away approximately at a right angle from the bottom (18, 19), **in that** in each case two identically shaped half shells (13, 14; 22, 23) adjoin one another directly, and mirror-symmetrically end to end with their wall (20, 21) and **in that** the circumferential seam (17) is provided for connecting the adjacent walls (20, 21) of the half shells (13, 14; 22, 23).

2. Pulsation damping capsule (11, 11', 11") according to Claim 1, **characterized in that** the pulsation damping capsule has an at least partially linear volume uptake as a function of the pressure of the surrounding pressure medium.

3. Pulsation damping capsule (11, 11', 11") according to Claim 2, **characterized in that** the pulsation damping capsule has a linear volume uptake exclusively within a predefined pressure working range, and **in that** a constant volume uptake is provided above the predefined pressure working range.

4. Pulsation damping capsule (11, 11', 11") according to Claim 1, **characterized in that** the pulsation damping capsule (11, 11', 11") has an integrated means, in particular an integrated stop means, which limits a spring-elastic compression.

5. Pulsation damping capsule (11, 11', 11") according to Claim 4, **characterized in that** each bottom (18, 19) is formed on the side of the inner space as a stop face (26, 27) in order to form the integrated stop means.

6. Pulsation damping capsule (11, 11', 11") according to Claim 4, **characterized in that** a medium and/or a filling element (28) which at least partially fills the inner space (16) for the stop function is provided as integrated means.

7. Pulsation damping capsule (11, 11', 11") according to Claim 6, **characterized in that** the filling element (28) bears substantially completely against the half shells (13, 14; 22, 23) in the region of the wall (20, 21), and **in that** the filling element (28) has a stop face (29, 30) at a spacing from the adjacent bottom (18, 19).

8. Pulsation damping capsule (11, 11', 11") according to Claim 6, **characterized in that** the filling body (28) has one or more recesses (31).

9. Pulsation damping capsule (11, 11', 11") according to one of Claims 6 to 8, **characterized in that** the filling element (28) is of metallic configuration or formed from plastic, and is provided as an insert part.

10. Pulsation damping capsule (11, 11', 11") according to Claim 6, **characterized in that** a gas filling or a liquid is provided as medium.

11. Pulsation damping capsule (11, 11', 11") according to Claim 1, **characterized in that** the half shells (13, 14; 23, 24) have a profiling, in particular a rotationally symmetrical profiling.

12. Pulsation damping module, **characterized by** a plurality of substantially identical pulsation damping capsules (11, 11', 11") which are provided as energy accumulators, according to at least one of the preceding Claims 1 to 11, the pulsation damping capsules (11, 11', 11") being provided loosely or as a bundle in a formed combination for pulsation damping.

13. Pulsation damping module according to Claim 12, **characterized in that** the bundle of pulsation damping capsules (11, 11', 11") is positioned within a pulsation damper chamber (12) of a receiving body (35) of a hydraulic assembly, in particular within a damper chamber of an electronically regulated vehicle brake system (1), said chamber being provided such that it is integrated into a suction path or into a pressure path of a pump (P).

14. Pulsation damping module according to Claim 12, **characterized in that** each bundle has holding means (32) which are provided for the directed holding and placing of the pulsation damping capsules (11, 11', 11").

15. Pulsation damping module according to Claim 14, **characterized in that** the holding means (32) are configured as a metallic binding made from sheet metal and/or wire, and **in that** one or more of the pulsation damping capsules (11, 11', 11") is/are welded to the holding means (32).

16. Pulsation damping module according to Claim 14 or 15, **characterized in that** each holding means (32) is provided as a separate component, **in that** the component has receiving and holding means (33, 34) for a plurality of pulsation damping capsules (11, 11', 11"), and **in that** the receiving and holding means (33, 34) act in a sprung manner, substantially from the radial outside, on the walls (20, 21) of the pulsation damping capsules (11, 11', 11").

17. Pulsation damping module according to at least one of Claims 14 to 16, **characterized in that** a plurality of identically configured holding means (32) are provided.

## Revendications

1. Capsule d'amortissement des pulsations (11, 11', 11") comprenant au moins un corps de membrane métallique assemblé de manière hermétique compacte à partir d'au moins deux coques, qui sépare un espace intérieur (16) d'un agent sous pression environnant, les coques étant reliées l'une à l'autre par matière le long d'une soudure (17) périphérique, de telle sorte que, sous l'effet de l'agent sous pression, notamment sous la pulsation de l'agent sous pression, la capsule d'amortissement des pulsations (11, 11', 11"), en tant qu'accumulateur d'énergie, puisse être comprimée élastiquement ou expansée, **caractérisée en ce que** les deux coques sont conçues en tant que demi-coques (13, 14 ; 22, 23) concaves, chaque demi-coque (13, 14 ; 22, 23) étant dotée en forme d'écuelle d'un fond inférieur (18, 19), ainsi que d'une paroi (20, 21) coudée environ à angle droit à partir du fond inférieur (18, 19), **en ce que** chaque fois deux demi-coques (13, 14 ; 22, 23) de conformation identique sont directement adjacentes l'une à l'autre, ainsi que de manière spéculaire bout à bout par leur paroi (20, 21) et **en ce que** la soudure périphérique (17) est prévue pour relier les parois (20, 21) voisines des demi-coques (13, 14 ; 22, 23).

2. Capsule d'amortissement des pulsations (11, 11', 11") selon la revendication 1, **caractérisée en ce qu'**en fonction de la pression de l'agent sous pression environnant, la capsule d'amortissement des pulsations fait preuve d'une augmentation de volume au moins partiellement linéaire.

3. Capsule d'amortissement des pulsations 11, 11', 11") selon la revendication 2, **caractérisée en ce que** la capsule d'amortissement des pulsations présente exclusivement à l'intérieur d'une zone de travail sous pression prédéfinie une augmentation de volume linéaire et **en ce qu'**au-dessus de la zone de travail sous pression prédéfinie, il est prévu une augmentation de volume constante.

4. Capsule d'amortissement des pulsations (11, 11', 11") selon la revendication 1, **caractérisée en ce que** la capsule d'amortissement des pulsations (11, 11', 11") comporte un moyen intégré, notamment un moyen de butée intégré, qui limite une compression résiliente.

5. Capsule d'amortissement des pulsations (11, 11', 11") selon la revendication 4, **caractérisée en ce que** chaque fond inférieur (18, 19) est conçu du côté de l'espace intérieur pour créer le moyen de butée intégré en tant que surface de butée (26, 27).

6. Capsule d'amortissement de pulsations (11, 11', 11") selon la revendication 4, **caractérisée en ce qu'**en tant que moyen intégré, il est prévu un agent et/ou un corps de remplissage (28) lequel remplit au moins partiellement l'espace intérieur (16) pour la fonction de butée.

7. Capsule d'amortissement de pulsations (11, 11', 11") selon la revendication 6, **caractérisée en ce que**, dans la zone de la paroi (20, 21), le corps de remplissage (28) est adjacent de manière sensiblement complète aux demi-coques (13, 14 ; 22, 23) et **en ce que** le corps de remplissage (28) comporte avec un écart par rapport au fond inférieur (18, 19) voisin une surface de butée (29, 30).

8. Capsule d'amortissement des pulsations (11, 11', 11') selon la revendication 6, **caractérisée en ce que** le corps de remplissage (28) comporte un ou plusieurs évidements (31).

9. Capsule d'amortissement des pulsations (11, 11', 11") selon l'une quelconque des revendications 6 à 8, **caractérisée en ce que** le corps de remplissage (28) est conçu en métal ou en matière plastique, ainsi que prévu en tant que pièce d'insertion.

10. Capsule d'amortissement des pulsations (11, 11', 11") selon la revendication 6, **caractérisée en ce qu'**en tant qu'agent, il est prévu un remplissage de gaz ou un liquide.

11. Capsule d'amortissement des pulsations (11, 11', 11") selon la revendication 1, **caractérisée en ce que** les demi-coques (13, 14 ; 23, 24) comportent un profilage, notamment un profilage symétrique en rotation.

12. Module d'amortissement des pulsations, **caractérisé par** plusieurs capsules d'amortissement des pulsations (11, 11', 11") sensiblement identiques, qui sont prévues en tant qu'accumulateur d'énergie, selon au moins l'une quelconque des revendications 1 à 11 précédentes, les capsules d'amortissement des pulsations (11, 11', 11") étant prévues de manière isolée ou en paquet dans un ensemble formé pour l'amortissement des pulsations.

13. Module d'amortissement des pulsations selon la revendication 12, **caractérisé en ce que** le paquet des capsules d'amortissement des pulsations (11, 11', 11") est placé à l'intérieur d'une chambre d'amortissement des pulsations (12) d'un corps de logement (35) d'un groupe hydraulique, notamment à l'intérieur d'une chambre d'amortissement d'un dispositif de freinage (1) à régulation électronique d'un véhicule, celle-ci étant prévue en étant intégrée dans un trajet d'aspiration ou dans un trajet sous pression d'une pompe (P).

14. Module d'amortissement des pulsations selon la revendication 12, **caractérisé en ce que** chaque paquet comporte des moyens de retenue (32), qui sont prévus pour la retenue et le placement orientés des capsules d'amortissement des pulsations (11, 11', 11").

15. Module d'amortissement des pulsations selon la revendication 14, **caractérisé en ce que** les moyens de retenue (32) sont conçus en tant que bandage métallique en tôle et/ou en fil métallique et **en ce qu'**une ou plusieurs capsules d'amortissement des pulsations (11, 11', 11") sont soudées avec les moyens de retenue (32).

16. Module d'amortissement des pulsations selon la revendications 14 ou 15, **caractérisé en ce que** chaque moyen de retenue (32) est prévu en tant que composant séparé, **en ce que** le composant comporte des moyens de logement et de retenue (33, 34) pour plusieurs capsules d'amortissement des pulsations (11, 11', 11") et **en ce que** les moyens de logement et de retenue (33, 34) s'agrippent élastiquement, sensiblement à partir de l'extérieur en direction radiale sur les parois (20, 21) des capsules d'amortissement des pulsations (11, 11', 11").

17. Module d'amortissement des pulsations selon au moins l'une quelconque des revendications 14 à 16, **caractérisé en ce que** plusieurs moyens de retenue (32) conçus à l'identique sont prévus.
